# EUROPÄISCHE PATENTSCHRIFT

(11) **EP 0 956 562 B1**
(45) Veröffentlichungstag und Bekanntmachung des Hinweises auf die Patenterteilung: **06.04.2005**
(21) Anmeldenummer: 98904081.1
(22) Anmeldetag: 16.01.1998
(51) Int. Cl.: G21C 5/06

(54) **HALTERUNG FÜR BRENNELEMENTE UND VERFAHREN ZUR INSTANDSETZUNG EINER SOLCHEN HALTERUNG**
HOLDING DEVICE FOR FUEL ELEMENTS AND METHOD FOR OVERHAULING SUCH HOLDING DEVICE
SUPPORT POUR ELEMENTS COMBUSTIBLES ET PROCEDE DE REFECTION D'UN TEL SUPPORT

(30) Priorität: 29.01.1997 DE 19703226
(43) Veröffentlichungstag der Anmeldung: 17.11.1999
(73) Patentinhaber: Framatome ANP GmbH, 91058 Erlangen (DE)
(72) Erfinder: WINTERMANN, Benedikt, D-91054 Buckenhof (DE); LEIBOLD, Friedrich, D-91230 Happurg (DE)
(74) Vertreter: Tergau & Pohl Patentanwälte
(86) Internationale Anmeldenummer: PCT/EP1998/000226
(87) Internationale Veröffentlichungsnummer: WO 1998/033188

(56) Entgegenhaltungen:
- DE-C- 4 432 616
- US-A- 5 430 779
- DATABASE WPI Week 8544 20.September 1985 Derwent Publications Ltd., London, GB; AN 85-273149 XP002066605 & JP 60 185 192 A (HITACHI LTD)
- DATABASE WPI Week 8727 2.Juni 1987 Derwent Publications Ltd., London, GB; AN 87-190103 XP002066606 & JP 62 121 391 A (HITACHI LTD)
- PATENT ABSTRACTS OF JAPAN vol. 096, no. 007, 31.Juli 1996 & JP 08 075888 A (TOSHIBA CORP)

## Beschreibung

Die Erfindung betrifft eine Halterung für Brennelemente in einem Reaktor, insbesondere in einem Siedewasserreaktor, mit einem Kernmantel und einem oberhalb des Kernmantels angeordneten geschmiedeten Kerngitter, die durch einen Adapterring miteinander verbunden sind. Die Erfindung betrifft auch ein Verfahren zur Instandsetzung einer Halterung für Brennelemente, insbesondere in einem Siedewasserreaktor, wobei ein Kerngitter vom oberen Ende eines Kernmantels entfernt und ein neues geschmiedetes Kerngitter über einen Adapterring mit dem Kernmantel verbunden wird.

Einbauten eines Reaktors, insbesondere eines Siedewasserreaktors, umfassen eine Halterung für Brennelemente. Ein Bestandteil dieser Halterung ist ein Kerngitter, durch dessen Öffnungen hindurch die Brennelemente verlaufen. Dadurch ist gewährleistet, daß die Brennelemente in einer gewünschten Weise positioniert werden können. Ein anderer Teil der Halterung ist der Kernmantel, der den aus den Brennelementen gebildeten Reaktorkern seitlich umschließt.

Bei einer Instandsetzung einer solchen Halterung kann es notwendig sein, das Kerngitter auszutauschen. Es wird dazu vom oberen Ende des Kernmantels abgetrennt und durch ein neues Kerngitter ersetzt. Dieses neue Kerngitter kann ein geschmiedetes Kerngitter sein, das stabiler als ein aus Blechen zusammengefügtes Kerngitter ist. Die Höhe eines solchen geschmiedeten Kerngitters ist geringer als die Höhe anderer Kerngitter. Daher ist es notwendig, das neue geschmiedete Kerngitter über einen Adapterring mit dem Kernmantel zu verbinden, damit die Halterung die gleiche Höhe wie bisher aufweist.

Bisher war es üblich, den Adapterring an das neue Kerngitter anzuschweißen. Dazu waren großvolumige Schweißnähte erforderlich, die schadensanfällig sind. Darüber hinaus wird bedingt durch den Schweißvorgang Wärme in das Material des Kerngitters und des Adapterringes eingebracht. Dieser Wärmeeintrag wirkt sich derart aus, daß die Anfälligkeit des Materials für Korrosion, insbesondere für Spannungsrißkorrosion, zunimmt. Das Kerngitter und der Kernmantel sind im Bereich der Schweißnähte im übrigen besonders gefährdet, da radioaktive Strahlung die Korrosion zusätzlich fördert.

Der Erfindung liegt die Aufgabe zugrunde, eine Halterung für Brennelemente und auch ein Verfahren zur Instandsetzung einer solchen Halterung anzugeben, bei denen es nicht zu einer erhöhten Korrosionswahrscheinlichkeit kommen kann. Darüber hinaus sollen das Kerngitter und der Kernmantel zuverlässig verbunden bzw. zu verbinden sein.

Die Aufgabe, eine geeignete Halterung für Brennelemente anzugeben, wird gemäß der Erfindung dadurch gelöst, daß der Adapterring mit dem Kerngitter ohne Schweißverbindung verbunden ist.

Damit wird der Vorteil erzielt, daß kein unerwünschter Wärmeeintrag auftreten kann. Folglich wird das Risiko für eine Korrosion des Kerngitters und/oder des Kernmantels gering gehalten. Das gilt auch bei einer im Siedewassereaktor üblichen radioaktiven Bestrahlung der Halterung.

Beispielsweise ist der Adapterring zwischen dem Kerngitter und dem Kernmantel lose eingelegt. Da der Kernmantel an seinem dem Kerngitter gegenüberliegenden Ende befestigt ist, wird der Adapterring dabei zwischen dem Kerngitter und dem Kernmantel eingeklemmt gehalten.

Beispielsweise kann der Adapterring am Kerngitter in einem Gleit- oder Paßsitz gehalten sein. Dadurch wird eine größere Stabilität gewährleistet.

Nach einer besonderen Ausführungsform kann der Adapterring am Kerngitter aufgeschrumpft sein.

Das Aufschrumpen eines Bauteiles auf ein anderes Bauteil ist unter dem Stichwort "Querpreßsitz" aus Hütte, des Ingenieurs Taschenbuch, Maschinenbau Teil A, Verlag von Wilhelm Ernst & Sohn, Berlin 1954, Seite 105 und 106, bekannt.

Durch den Einsatz einer solchen Schrumpfverbindung zwischen dem Kernmantel und dem Kerngitter wird eine besonders feste Verbindung gewährleistet, die ohne Schweißverbindung auskommt. Der Adapterring kann das Kerngitter von außen umgreifen. Er wird dazu soweit erwärmt, daß sein innerer Durchmesser größer als der äußere Durchmesser des Kerngitters ist. Dann wird er auf das Kerngitter aufgesetzt und durch die erfolgende Abkühlung aufgeschrumpft.

Die Verbindung von Kerngitter und Adapterring kann beispielsweise durch Verbindungselemente zusätzlich gesichert sein. Diese Verbindungselemente können Bolzen sein, die in Bohrungen angeordnet sind, die vom Adapterring in das Kerngitter hinein verlaufen. Durch diese Verbindungselemente werden die beiden Bauteile besonders gut daran gehindert, sich relativ zueinander zu bewegen.

Die Aufgabe, ein geeignetes Verfahren zur Instandsetzung einer solchen Halterung anzugeben, wird gemäß der Erfindung dadurch gelöst, daß der Adapterring mit dem Kerngitter ohne Schweißvorgang verbunden wird.

Auch damit wird der Vorteil erzielt, daß keine große Wärmemenge in das Material von Kerngitter und Adapterring eingebracht wird und somit das Material, selbst wenn es radioaktiv bestrahlt wird, kaum anfällig für Korrosion, z.B. Spannungsrißkorrosion, ist. Trotzdem wird eine stabile Verbindung von Kerngitter und Kernmantel erreicht. Eine Instandsetzung ist folglich einfach mit zuverlässigem Ergebnis durchführbar.

Der Adapterring wird beispielsweise zwischen dem Kerngitter und dem Kernmantel lose eingelegt. Er ist dann zwischen den beiden genannten Bauteilen eingeklemmt. Beispielsweise wird der Adapterring am Kerngitter in einem Gleit- oder Paßsitz gehalten. Dieser kann durch eine Aunehmung für den Adapterring im Kerngitter gebildet sein.

Nach einem besonders vorteilhaften Beispiel kann der Adapterring am Kerngitter aufgeschrumpft werden. Durch die Aufschrumpftechnik wird eine besonders stabile Verbindung ohne Schweißvorgang erzielt.

Beispielsweise kann die Verbindung des Adapterrings mit dem Kerngitter durch Verbindungselemente gesichert werden. Diese können z.B. Bolzen sein. Solche Verbindungselemente, die sich vom Adapterring bis in das Kerngitter hinein erstrecken, können die Verbindung besonders gut stabilisieren.

Mit der Halterung und mit dem Verfahren zur Instandsetzung einer solchen Halterung wird insbesondere der Vorteil erzielt, daß eine Korrosion, insbesondere eine Spannungsrißkorrosion, weitgehend vermieden wird.

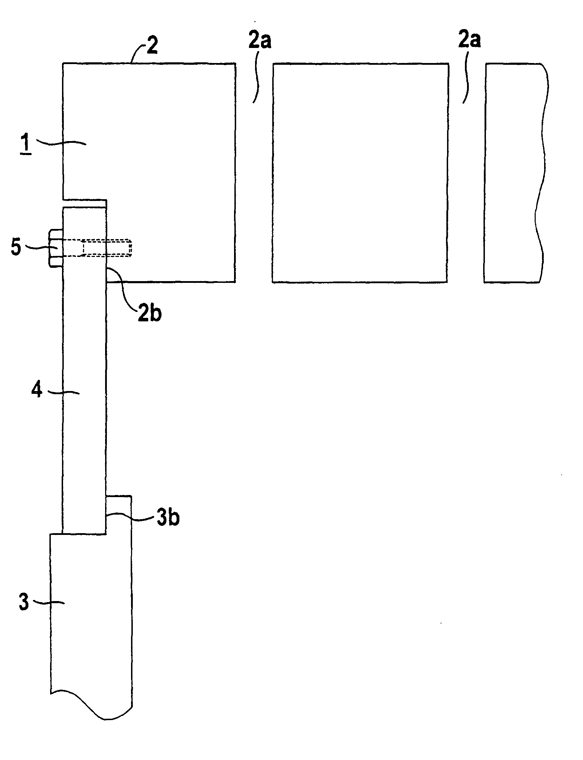

Ein Ausführungsbeispiel für eine Halterung für Brennelemente nach der Erfindung, die mit dem Verfahren nach der Erfindung in Stand gesetzt sein kann, wird anhand der Zeichnung näher erläutert:
In einem Siedewasserreaktor ist eine Halterung 1 angeordnet, durch die Brennstäbe, aber auch andere Bauteile, z.B. Sensorlanzen, gehalten werden können. Der obere Abschluß der Halterung 1 besteht aus einem Kerngitter 2, das mehrere Öffnungen 2a aufweist. In diesen Öffnungen 2a werden Brennelemente oder andere Bauteile positioniert. Das Kerngitter 2 kann aus Blechen aufgebaut sein. Insbesondere ist es jedoch geschmiedet, was eine hohe Stabilität gewährleistet. In die Öffnungen 2a im Kerngitter 2 können Brennelemente eingeschoben werden. Alle Brennelemente, die den sogenannten Reaktorkern bilden, sind im Siedewasserreaktor von einem Kernmantel 3 seitlich umgeben.

Bei einem Austausch des Kerngitters 2 wird häufig ein aus Blechen bestehendes Kerngitter 2 durch ein geschmiedetes Kerngitter 2 ersetzt, das stabiler ist. Dieses neue Kerngitter 2 hat dann eine geringere Höhe als das alte Kerngitter 2. Folglich muß zwischen dem Kernmantel 3 und dem Kerngitter 2 ein Adapterring 4 angeordnet werden, damit die Brennelemente weiterhin vollständig umschlossen sind.

Der Adapterring 4 ist mit dem geschmiedeten Kerngitter 2 ohne Schweißverbindung verbunden. Durch eine Schweißverbindung würde eine hohe Wärmemenge in das Material des Kerngitters 2, aber auch des Adapterringes 4 eingebracht. Das Material wäre dadurch besonders anfällig für Korrosion, insbesondere für Spannungsrißkorrosion. Diese Anfälligkeit würde durch die Strahlung im Siedewasserreaktor noch verstärkt. Durch die Vermeidung einer Schweißverbindung kann es nicht zu einer hohen Korrosionsrate kommen.

Der Adapterring 4 kann in Ausnehmungen 2b, 3b im Kerngitter 2 und im Kernmantel 3 gehalten sein. Er kann lose eingelegt oder in einem Gleit- oder Paßsitz gehalten sein. In einer besonders vorteilhaften Ausführungsform ist der Adapterring 4 am Kerngitter 2 aufgeschrumpft. Zusätzlich kann der Adapterring 4 durch Verbindungselemente 5, die ihn durchdringen und in das Kerngitter 2 eingreifen, in seiner Position gesichert sein. Die Verbindungselemente 5 können Bolzen sein.

## Patentansprüche

1. Halterung (1) für Brennelemente in einem Reaktor, insbesondere in einem Siedewasserreaktor, mit einem Kernmantel (3) und einem oberhalb des Kernmantels (3) angeordneten geschmiedeten Kerngitter (2), die durch einen Adapterring (4) miteinander verbunden sind,
**dadurch gekennzeichnet, daß** der Adapterring (4) mit dem Kerngitter (2) ohne Schweißverbindung verbunden ist.

2. Halterung (1) nach Anspruch 1,
**dadurch gekennzeichnet, daß** der Adapterring (4) zwischen dem Kerngitter (2) und dem Kernmantel (3) lose eingelegt ist.

3. Halterung (1) nach einem der Ansprüche 1 oder 2,
**dadurch gekennzeichnet, daß** der Adapterring (4) am Kerngitter (2) in einem Gleit- oder Paßsitz gehalten ist.

4. Halterung (1) nach einem der Ansprüche 1 bis 3,
**dadurch gekennzeichnet, daß** der Adapterring (4) am Kerngitter (2) aufgeschrumpt ist.

5. Halterung (1) nach einem der Ansprüche 1 bis 4,
**dadurch gekennzeichnet, daß** die Verbindung des Adapterrings (4) mit dem Kerngitter (2) durch Verbindungselemente (5) gesichert ist.

6. Verfahren zur Instandsetzung einer Halterung (1) für Brennelemente, insbesondere in einem Siedewasserreaktor, wobei ein Kerngitter vom oberen Ende eines Kernmantels (3) entfernt und ein neues geschmiedetes Kerngitter (2) über einen Adapterring (4) mit dem Kernmantel (3) verbunden wird,
**dadurch gekennzeichnet, daß** der Adapterring (4) mit dem Kerngitter (2) ohne Schweißvorgang verbunden wird.

7. Verfahren nach Anspruch 6,
**dadurch gekennzeichnet, daß** der Adapterring (4) zwischen das Kerngitter (2) und den Kernmantel (3) lose eingelegt wird.

8. Verfahren nach einem der Ansprüche 6 oder 7,
**dadurch gekennzeichnet, daß** der Adapterring (4) am Kerngitter (2) in einen Gleit- oder Paßsitz eingelegt wird.

9. Verfahren nach einem der Ansprüche 6 bis 8,
**dadurch gekennzeichnet, daß** der Adapterring (4) auf das Kerngitter (2) aufgeschrumpft wird.

10. Verfahren nach einem der Ansprüche 6 bis 9,
**dadurch gekennzeichnet, daß** die Verbindung des Adapterrings (4) mit dem Kerngitter (2) durch Verbindungselemente (5) gesichert wird.

## Claims

1. Holder (1) for fuel elements in a reactor, in particular in a boiling water reactor, with a core shroud (3) and with a forged core grid (2) arranged above the core shroud (3), the said core shroud and core grid being connected to one another by means of an adapter ring (4), **characterized in that** the adapter ring (4) is connected to the core grid (2) without a welded joint.

2. Holder (1) according to Claim 1, **characterized in that** the adapter ring (4) is inserted loosely between the core grid (2) and core shroud (3).

3. Holder (1) according to one of Claims 1 and 2, **characterized in that** the adapter ring (4) is held on the core grid (2) with a sliding or snug fit.

4. Holder (1) according to one of Claims 1 to 3, **characterized in that** the adapter ring (4) is shrinkfitted on the core grid (2).

5. Holder (1) according to one of Claims 1 to 4, **characterized in that** the connection of the adapter ring (4) to the core grid (2) is secured by means of connecting elements (5).

6. Method for repairing a holder (1) for fuel elements, in particular in a boiling water reactor, a core grid being removed from the upper end of a core shroud (3) and a new forged core grid (2) being connected to the core shroud (3) via an adapter ring (4), **characterized in that** the adapter ring (4) is connected to the core grid (2) without a welding operation.

7. Method according to Claim 6, **characterized in that** the adapter ring (4) is inserted loosely between the core grid (2) and core shroud (3).

8. Method according to one of Claims 6 and 7, **characterized in that** the adapter ring (4) is inserted into a sliding or snug fit on the core grid (2).

9. Method according to one of Claims 6 to 8, **characterized in that** the adapter ring (4) is shrinkfitted onto the core grid (2).

10. Method according to one of Claims 6 to 9, **characterized in that** the connection of the adapter ring (4) to the core grid (2) is secured by means of connecting elements (5).

## Revendications

1. Support (1) d'assemblages combustibles dans un réacteur, notamment dans un réacteur à eau bouillante, comprenant une enveloppe (3) de coeur et une grille (2) de coeur forgée et disposée au-dessus de l'enveloppe (3) de coeur, qui sont reliées entre elles par un anneau (4) formant adaptateur,
**caractérisé en ce que** l'anneau (4) formant adaptateur est relié à la grille (2) de coeur sans joint soudé.

2. Support (1) suivant la revendication 1,
**caractérisé en ce que** l'anneau (4) formant adaptateur est inséré de manière lâche entre la grille (2) de coeur et l'enveloppe (3) de coeur.

3. Support (1) suivant l'une des revendications 1 ou 2,
**caractérisé en ce que** l'anneau (4) formant adaptateur est maintenu sur la grille (2) de coeur suivant un ajustement glissant ou suivant un ajustement fin.

4. Support (1) suivant l'une des revendications 1 à 3,
**caractérisé en ce que** l'anneau (4) formant adaptateur est rétreint sur la grille (2) de coeur.

5. Support (1) suivant l'une des revendications 1 à 4,
**caractérisé en ce que** la liaison de l'anneau (4) formant adaptateur avec la grille (2) de coeur est assurée par des éléments (5) de liaison.

6. Procédé de remise en état d'un support (1) d'assemblages combustibles, notamment dans un réacteur à eau bouillante, en retirant une grille de coeur de l'extrémité supérieure d'une enveloppe (3) de coeur et en
**caractérisé en ce que** l'on relie l'anneau (4) formant adaptateur à la grille (2) de coeur sans opération de soudage.

7. Procédé suivant la revendication 6,
**caractérisé en ce que** l'on met l'anneau (4) formant adaptateur, de manière lâche entre la grille (2) de coeur et l'enveloppe (3) de coeur.

8. Procédé suivant l'une des revendications 6 ou 7,
**caractérisé en ce que** l'on met l'anneau (4) formant adaptateur sur la grille (2) de coeur suivant un ajustement glissant ou suivant un ajustement fin.

9. Procédé suivant l'une des revendications 6 à 8,
**caractérisé en ce que** l'on rétreint le noyau (4) formant adaptateur sur la grille (2) de coeur.

10. Procédé suivant l'une des revendications 6 à 9,
**caractérisé en ce que** l'on assure la liaison du noyau (4) formant adaptateur avec la grille (2) de coeur par des éléments (5) de liaison.
